# EUROPEAN PATENT APPLICATION

(11) **EP 1 586 970 A1**
(43) Date of publication of application: **19.10.2005**
(21) Application number: 04006381.0
(22) Date of filing: 17.03.2004
(51) Int. Cl.: G05G 9/047, G06F 3/033

(54) **User interface device**

(71) Applicant: 3DConnexion GmbH, 82229 Seefeld (DE)
(72) Inventor: Pascucci, Antonio, 82229 Seefeld (DE)
(74) Representative: Rupp, Christian

(57) **Abstract**

The present invention relates to a user interface device (100) for manual input of control signals in a computer environment. The device (100) is adapted for connection in communication with a computer processing unit, and comprises: a base (10) for supporting the device on an operating surface; a control panel (20) provided on the base (10), including a first input member (21) mounted on and upstanding from the base (10) for manual manipulation by a user, the first input member (21) being movable relative to the base (10) to generate corresponding input control signals within the computer environment; and a palm rest (40) provided on the base (10) for supporting the palm of the user's hand during use of the device (100). The control panel (20) further includes a group of user input buttons (22, 23, 24), each of which can be actuated to generate an associated input control signal, wherein at least one of said buttons (22, 23, 24) is programmable. The device (100) further includes display means (30, 30') provided on the base (10) for displaying the associated control signal or function programmed for each programmable button.

## Description

### Field of the invention

The present invention relates to a device that provides a user interface for a computing or computer-related environment. More particularly, the invention relates to a user interface device with which a user may manually input control signals in a computing or a computer-related environment.

The present invention has particular application as a hand-operated device that serves as a control signal input interface for a user in the manipulation and processing of digital information, such as digital images, and it will be convenient to describe the invention in this exemplary context. It will be appreciated, however, that the invention is not limited to this application, but may for example also find application in the control of a wide range of robotic and automated machinery.

### Background of the invention

A broad and ever increasing range of hand-operated devices for user input of control signals in computing or digital applications are currently available in the marketplace. The more well-known of these devices include the conventional mouse in its various forms, the joystick and the trackball.

A relatively recent development of the Applicant, described in US patent publication no. 2003/0103217, relates to a sensor arrangement for the detection of relative movements or the relative position of two objects, and to the incorporation of such a sensor arrangement in a user interface device for inputting control signals in a computing environment.

Furthermore, the product range of the Applicant includes a diverse range of user interface accessory devices for computing applications, including the SpaceBall™, the SpaceMouse™ and the CadMan™.

Naturally, the efforts to optimise ergonomics and the ease of handling and processing of data and information in the computing environment are on-going, particularly in relation to a range of specific software applications. The present invention represents a continuation of that optimisation process, with the control of CAD and image processing software applications in mind. In particular, the present invention is based on the object of creating an improved user interface accessory device from the point of view of functionality and ergonomics, most preferably suited to CAD/CAM and image processing applications.

### Summary of the invention

According to one aspect, the present invention provides a user interface device for manual input of control signals in a computer environment, and especially 3D screen-object motion control signals. The device is adapted for connection in communication with a computer processing unit, and comprises:
a base for supporting the device on an operating surface;
a control panel including a first input member mounted on and upstanding from the base for manual manipulation by a user, the first input member being moveable relative to the base for generating input control signals within the computer environment;
a palm rest provided on the base for supporting the palm of the user's hand during use of the device; and
a display panel provided on the base for presenting a visual display of information relating to the operation of the device.

The base of the user interface device according to the invention typically has an upper side presenting the functional elements of the device (i.e. the control panel, the palm rest and the display panel) for access by the user, and an underside designed to face the operating surface of a table or desktop upon which the device is supported during use.

In a preferred form of the invention, the display panel, control panel and palm rest are arranged adjacent one another on the upper side of the base. For example, the display panel is preferably arranged at one end region of the base, the palm rest is preferably provided at an opposite end region of the base, and the control panel is preferably provided between the display panel and the palm rest in a central region at the upper side of the base. Although other arrangements are possible, this particular configuration has been found to provide a superior performance in terms of ergonomics and functionality.

In one preferred form of the invention, the palm rest has a substantially flat or slightly concave upper surface for receiving and supporting the palm of the user's hand. In an alternative form of the invention, the palm rest has a convex upper surface adap-face adapted to nestle within the palm of the user's hand during operation of the device. The upper surface of the palm rest is preferably smooth, and may optionally be lightly padded or resilient for additional comfort.

In a preferred form of the invention, the display panel is adapted to display information relating to the operation currently being performed with the device, and/or the functional options currently available to the user with the device. The display panel may also provide other information, such as time of day and date. The display panel preferably comprises a liquid crystal display (LCD), which may or may not be illuminated. The display panel may comprise a plurality of discrete display windows or screens. Alternatively, the display panel may comprise a single larger display window or screen for presenting all of the visual display of information.

In a preferred form of the invention, the control panel further includes a group of user input buttons, each of which can be actuated to generate an associated input control signal within the computer environment, wherein the associated control signal or function of at least one of said buttons is programmable. The display panel is therefore preferably adapted to display the currently programmed function of the at least one programmable button. In a more preferred embodiment, the function of each of the buttons in the group is programmable, and the display panel is adapted to display the programmed function of all of the programmable buttons. The group preferably comprises at least three, and preferably four, or even as many as six or more buttons. In this respect, the user interface device of the invention may include operating software designed to enable the function associated with the actuation of the at least one programmable user input button to be altered or set.

In a preferred form of the invention, the at least one programmable button may be programmed to perform one of a number of different possible functions, and the display panel may be adapted to display those different possible functions available for the button(s) prior to the selected programming. In this respect, the user interface device may include operating software designed to enable the possible alternative functions of each programmable user input button to be displayed, and for one of the possible alternative functions for each button to be selected and set.

In a preferred form of the invention, the device is configured such that, when the palm of the user's hand is located on the palm rest, the first input member is located in general alignment with, and within reach of, the middle three fingers of the hand. In such a configuration, the said group of buttons is preferably arranged adjacent the first input member in the vicinity of where the user's thumb would reach, or otherwise in the vicinity of where the user's smallest finger would reach. That group of buttons is preferably arranged in a compact cluster.

In a preferred form of the invention, the device includes at least two groups of user input buttons, one of said groups comprising buttons whose function is able to be programmed, and the other group comprising buttons having a pre-set or predetermined operation. In such an embodiment, one of said groups is preferably arranged in the vicinity of the user's thumb and the other said group is arranged in the vicinity of the smallest finger when the user's hand is generally centred on the first input member.

The user interface device of the invention is typically an accessory device separate from the computer processor and/or related machinery. The connection of the device for communication with the computer processing unit may be effected via cables, or alternatively may be wireless. A wireless connection may, for example, be effected by infra-red, radio-wave or microwave radiation between a transmitter provided in the device and a receiver provided in or in connection with the processor.

The user interface device of the invention typically incorporates a sensor arrangement which is designed to detect and interpret movement of the first input member in said at least two degrees-of-freedom relative to the base. In a preferred form of the invention, the user interface device incorporates a sensor arrangement for the detection of relative movements or the relative position of two objects as described in US patent publication No. 2003/0103217, the entire contents of which are incorporated herein by reference. Accordingly, the sensor arrangement is preferably designed to detect and interpret movement of the first input member in at least three degrees-of-freedom, and preferably more. For example, the movement of the first input member for generating input signals in the computer environment may include rotary movement of the first input member about an axis extending upwardly from the base, and/or axial (or vertical) displacement of the first input member, and/or pivoting or translational movement of the first input member.

In a preferred form of the invention, the first input member comprises a knob-like element. This knob-like element is preferably rounded with a diameter in the range of about 30mm to 60mm, and it preferably has a height upstanding from the base in the range of about 20mm to 50mm. The sensor arrangement is typically at least partially housed within a central space encompassed by the first input member, e.g. within a hollow central region of the knob-like element. But the sensor arrangement may also be partially housed within the base. The sensor arrangement may therefore be firmly mounted upon the base, and/or on or within a frame around which the first input member is mounted.

In a preferred form of the invention, the first input member is mounted for rotary movement about a generally upward (e.g. substantially vertical) axis. The angular range of that rotary movement may be limited; for example, it may be less than about 60° to either side of a rotational home position in both the clockwise and counter-clockwise directions. The first input member preferably has at least two degrees-of-freedom of movement, and more preferably three or more degrees-of-freedom of movement for generating corresponding control signals within the computer environment. For example, in addition to, or as an alternative to rotary movement, the first input member may be pivotable and/or translatable relative to the base of the device. The input control signals generated upon movement of the first input member may be designed for two-dimensional data manipulation within the computer environment, but are preferably also suited to three-dimensional data processing, such as is typical with computer animation, computer aided design and digital image processing applications.

Importantly, the first input member is preferably resiliently mounted on the base such that rotary, pivotal and/or translational movement of the first input member relative to the base is against a resilient bias, e.g. via one or more spring elements, that acts to return the first input member to a neutral or home position. Furthermore, the first input member is preferably adapted for "finger-tip control". That is, the rotary, pivotal and/or translational movement of the first input member requires a force commensurate with what can be readily applied by an average user's fingers. For example, in the case where the first input member incorporates spring elements, the spring bias is typically less than about 15 N/mm, and preferably in the range of about 0.5 to about 10 N/mm, more preferably in the range of about 1 to about 5 N/mm. With regard to rotational displacement of the first input member, a corresponding bias preferably applies.

The user interface device of the invention is preferably designed for one-handed operation by a user, although two-handed operation is also contemplated. The device of the invention is most particularly envisaged for applications in image or model manipulation with CAD/CAM software, animation and image processing software. In particular, the control signals generated upon movement or actuation of the input members of the device are preferably related to free navigation of the point of view of a digital image or model, enabling both zoom and pan operations to be performed simultaneously. The configuration of the inventive device has the advantage of providing the user with a very natural and intuitive way to explore and manipulate images and designs in the computer environment.

According to another aspect, the present invention provides a user interface device for manual input of control signals in a computer environment, the device being adapted for connection in communication with a computer processing unit, and comprising:
a base for supporting the device on an operating surface;
a control panel provided on the base, and including a first input member mounted on and upstanding from the base for manual manipulation by a user, the first input member being moveable relative to the base for generating input control signals within the computer environment; and
a palm rest provided on the base for supporting the palm of the user's hand during use of the device;
wherein the control panel further includes a group of user input buttons, each of which can be actuated to generate an associated input control signal, wherein at least one of said buttons is programmable; and
wherein the device includes display means provided on the base for displaying the associated control signal or function selected for each said programmable button.

In a preferred form of the invention, the function of each of the buttons in the group is programmable, and the group comprises at least three, preferably four, and even as many as six or more buttons. In this respect, the user interface device of the invention preferably includes operating software designed to enable the function associated with actuation of a particular button to be altered or set to one of a number of possible alternatives. The operating software may also be designed to enable parameters of the device such as response speed and/or sensitivity to be adjusted.

In a preferred form of the invention, the device is configured such that, when the palm of the user's hand is located on the palm rest, the first input member is located generally aligned with, and within reach of, the middle three fingers of the hand. In such a case, the said group of buttons is preferably arranged in the vicinity of where the user's thumb would reach or in the vicinity of where his/her smallest finger would reach when the user's hand is centred on the first input member.

In a preferred form of the invention, the device includes at least two groups of user input buttons, one of said groups comprising buttons whose function is able to be programmed, and the other group comprising buttons having a pre-set or predetermined operation, one of said groups being arranged in the vicinity of the user's thumb and the other said group being arranged in the vicinity of the smallest finger.

In a preferred form of the invention, the means for displaying the currently programmed function of each programmable button comprises a display panel provided on the base. The display means may comprise a plurality of discrete display windows or screens, each of which is associated with a corresponding one of the programmable buttons. Alternatively, the display means may comprise a single larger display window or screen for presenting all of the visual display of information. For example, the display means may be adapted to display the currently programmed function of each of the programmable buttons, and/or information relating to the operation currently being performed with the device. The display means may also provide other information, such as time of day and date. The display means preferably comprises one or more liquid crystal display (LCD), which may or may not be illuminated.

According to yet another aspect, the present invention concerns a user interface device for manual input of control signals in a computer environment, the device being adapted for connection in communication with a computer processing unit, and comprising:
a base for supporting the device on an operating surface;
a control panel provided on the base, including a first input member mounted on and upstanding from the base for manual manipulation by a user, the first input member being moveable relative to the base for generating input control signals within the computer environment; and
a palm rest provided on the base for supporting the palm of the user's hand during use of the device;
wherein the device is configured such that, in use, the first input member is located generally aligned with and within reach of the middle three fingers of the user's hand when the palm of the user's hand is on the palm rest; and
wherein the control panel further includes at least two groups of user input buttons, one of said groups being located in the vicinity of the user's thumb and the other said group being located in the vicinity of the user's smallest finger when the device is in use.

In a preferred form of the invention, the user interface device further includes display means for presenting a visual display of information relating to the operation of the device. Preferably, the display means is in the form of a display panel provided on the base, which may for example comprise a liquid crystal display (LCD) screen. The display panel may or may not be illuminated. The display panel is preferably adapted to display information relating to the user operation currently being performed with the device, and/or the options currently available to the user via certain buttons. The display panel may also provide other information, such as time of day and date. In an alternative embodiment, the display means of the invention may be software based, such that a monitor of the associated computer processing unit is adapted to display or present the information relating to the operation of the device. That is, this information is communicated to the processing unit which then, via an appropriate software coding, displays the information for the user's benefit on the computer monitor.

The user input "buttons" referred to herein are button-type switches or relays actuated by finger pressure, as is known in the art. That is, the actuation of these button type switches or relays by application of downward finger pressure is adapted to generate a corresponding (possibly programmable) control signal within the computer environment.

In a further alternative aspect, the present invention also provides a system for image generation and/or manipulation in a computer environment, wherein the system includes a user interface device according to the invention as described above. For example, the system may be a CAD/CAM system or a computer animation or image processing system.

### Brief description of the drawings

Particular embodiments of the user interface device according to the present invention are hereafter described by way of example with reference to the accompanying drawings, in which like reference characters designate like parts throughout the several views, and in which:
Fig. 1 is a schematic plan view of a user interface device according to one preferred embodiment of the invention;
Fig. 2 is a perspective view of a user interface device essentially corresponding to the preferred embodiment of Fig. 1; and
Fig. 3 is a schematic layout of a control panel for a user interface device according to another preferred embodiment of the invention.

### Detailed description of the preferred embodiments

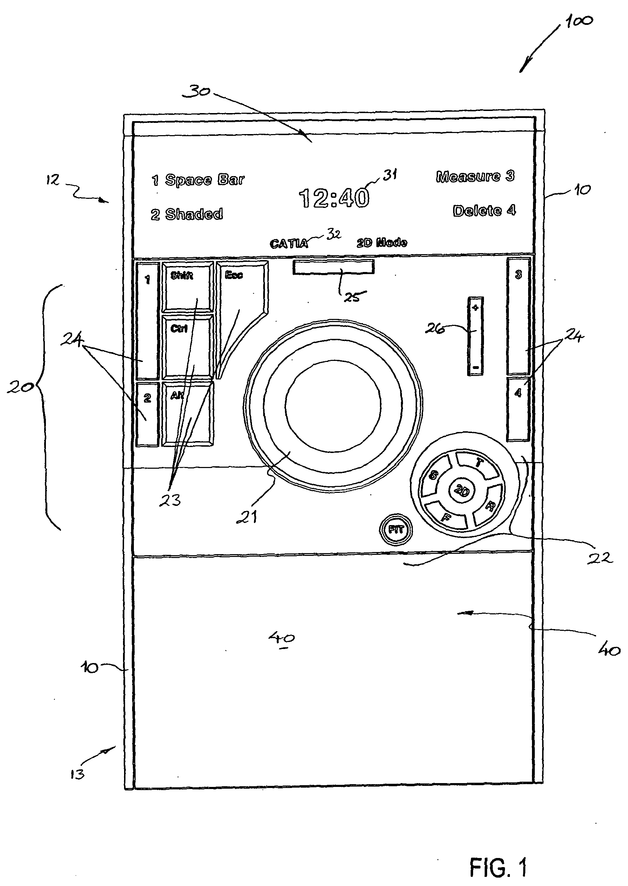

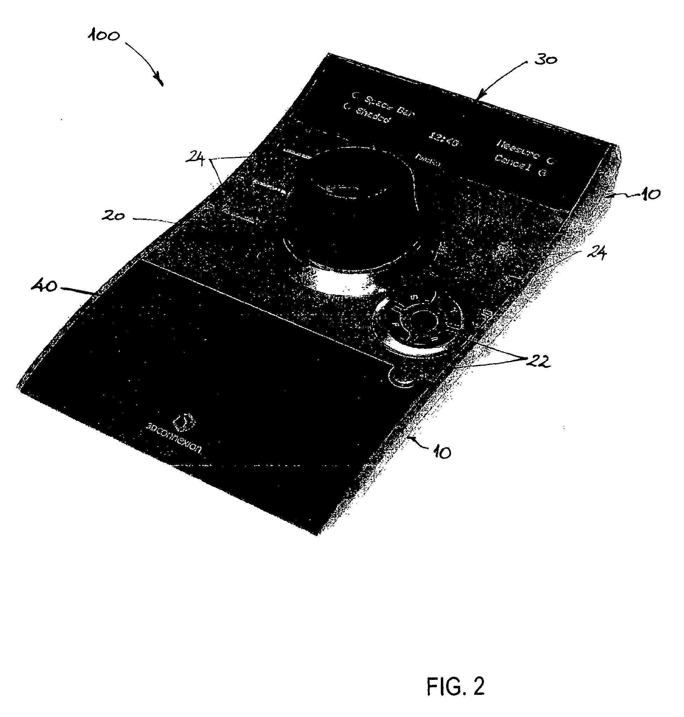

Referring firstly to Figs. 1 and 2 of the drawings, a top schematic view and a perspective view of a user interface device (100) according to the invention are shown. The user interface device (100) of the invention is adapted for the manual input of control signals in a computer environment, and especially for input of 2D and 3D screen-object motion control signals in CAD and animation design applications. The device (100) in this embodiment has a generally rectangular configuration comprising a relatively flat plate-like base member (10), the upper side (11) of which is visible in the drawing. The underside (not shown) is adapted to rest upon a supporting surface, such as the top of the table or desk, and typically includes footings (not shown), e.g. of rubber, to grip the supporting surface.

Provided on the upper side (11) of the base member (10), the user interface device (100) of the invention includes a control panel (20) having first input member (21) in the form of a relatively large upstanding knob-like element. The control panel (20) furthermore includes three groups (22, 23, 24) of push-button type user input switches or relays arranged adjacent the knob-like element (21). The device (100) also includes a display panel (30) arranged at one end region (12) of the rectangular base member (10), and a palm rest (40) located at the opposite end region (13). Accordingly, in the embodiment shown in Fig. 1, the control panel (20) of the user interface device is located generally centrally of the upper side of base (10) between the palm rest (40) and the display panel (30).

The knob-like first input member (21) has a height of about 50mm, a diameter of about 40 mm, and is preferably adapted for rotary movement about a substantially vertical axis. The angular range of that rotary movement may be limited; i.e. in this example, less than about 45° to either side of a rotational home position in both the clockwise and counter-clockwise directions. The rotary movement of the first input member (21) is resiliently biased by spring elements (not shown) to return to the rotational home position. The knob-like first input member (21) may also be adapted for pivotal and/or translational movement relative to the base (10). In each case, the movements of the knob-like first input member (21) relative to the base (10) are adapted to generate corresponding control signals in the two dimensional or three-dimensional software applications within the computer environment. Importantly, the knob-like first input member (21) is adapted for "fingertip control", such that rotary, pivotal and/or translational movement of the knob-like element can be readily achieved with finger strength, against a spring bias in the range of about 1 to about 5 N/mm.

The particular embodiment illustrated is designed for left-handed use, such that when the palm of the users hand rests upon the palm rest (40), the knob-like first input member (21) is generally aligned with, and within reach of, the three middle fingers of the user's hand.

The first group (22) of user input buttons comprises six buttons, five of which are provided in a circular arrangement in the vicinity of where the user's thumb would reach - to the lower right-hand side of the knob-like element (21) as seen in the drawing. This first group of six buttons (22) are referred to as the "views" buttons. The four buttons in forming the circle are labelled F, T, R and S, which correspond to the standard "Front", "Top", "Right" and "Sketch Plain" views. The central 2D button within that circle is the "zoom and pan" button which permits operation of the device (100) in the 2-dimensional mode. These five buttons of the first group (22) are located at the end of a frusto-conical stub or protrusion which faces or is directed towards the tip of the user's thumb to further facilitate user access and ergonomics. The sixth button of this group (22) is labelled "FIT" and belongs functionally with the "views" buttons. It's designed to perform a "re-fit" function, i.e. to fit a selected image portion to the user's monitor screen.

The second group (23) of user input buttons are labelled SHIFT, CTRL, ALT and ESC and are provided in the vicinity of where the user's littlest finger would reach - to the upper left-hand side of the knob element (21) as seen in the drawing. This second group of buttons (23) is referred to as the "high frequency" or the "keyboard" buttons. In particular, these buttons are labelled with the same name, and perform the same function as, the corresponding keyboard keys. Furthermore, because these buttons (23) are typically used on a frequent basis, they are preferably relatively large to enable easy access and operation by the user. By way of example, nearly all CAD applications employ the Windows™ short-cuts: CTRL+S = Save file, CTRL+N = New file, CTRL+O = Open file, CTRL+C = Copy, CTRL+V = Paste, and CTRL+Z = Undo. Accordingly, the availability of these "keyboard" buttons on the user interface device (100) greatly assists in reducing the otherwise frequent hand movements to and from the regular keyboard, thereby economising on time and simplifying the process.

Finally, the control panel (20) in the embodiment of Figs. 1 and 2 includes a third group (24) of user input buttons labelled 1, 2, 3 and 4. Two of these buttons are arranged at the extreme left-hand side of the control panel (20) and two of them are at the extreme right-hand side of the control panel. This third group of buttons (24) are the application buttons. Each of these four buttons (24) is programmable, which enables the user to configure the user interface device (100) of the invention to the particular software application for which it is being used. Accordingly, the user interface device (100) typically includes operating software which enables the control signal associated with the actuation of each of the buttons in this group (24) to be set by the user, preferably after selection from a number of possible alternatives.

Importantly, the display panel (30) across the top end region (12) of the user interface device is in the form of a single large LCD display screen, which is adapted to show the user the particular function that has been programmed for each of the buttons labelled 1-4. This can be seen in Fig. 1, which illustrates the display panel (30) showing the number of the button and a brief description or keyword denoting the corresponding function programmed for that button. In addition, the display panel (30) also displays the time of day (31), the name of the particular software application (32) for which the device (100) is currently employed, as well as the fact that the device is currently in 2d mode. The display panel (30) is preferably arranged on the base (10) inclined at an angle, e.g. about 45°, the relative to the horizontal surface of the table or desktop upon which the device (100) is supported in order to enhance the user's ability to read the display at a glance.

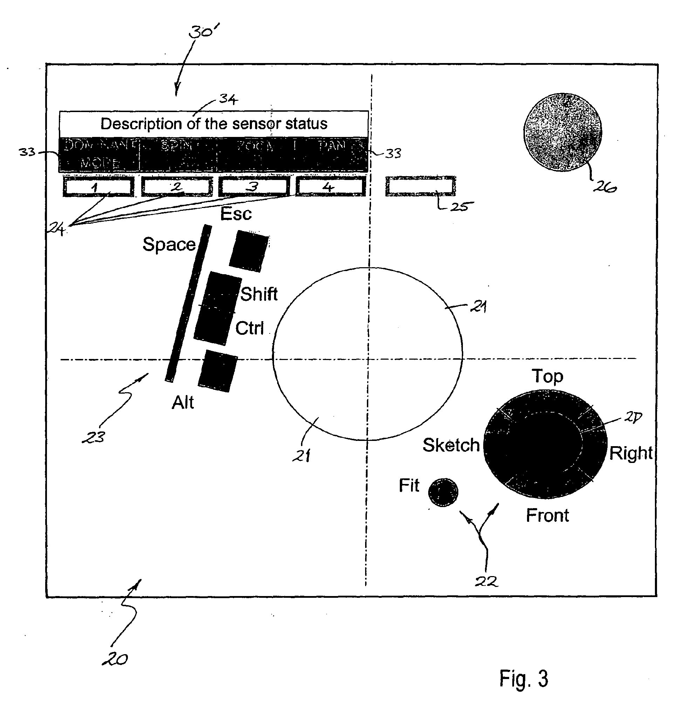

Referring now to Fig. 3 of the drawings, details of the layout for a control panel (20) according to a slightly different embodiment of a user interface device (100) according to invention is illustrated. The first group of buttons (22) is unchanged, and the second group of buttons (23) is also substantially the same - although this time also including a fifth "space bar" button. In this instance, however, the control panel (20) itself incorporates a display means (30') in the form of four discrete windows or screens (33), each of which is associated with a separate one of the four programmable buttons numbered 1 to 4 in the button group (24). As can be seen, the group of programmable buttons (24) is in this instance arranged together at the top left-hand side of the control panel (20). Each of the windows or screens (33) may be an LCD, or may more simply be adapted for illumination to indicate the programmed function that is selected upon pressing the corresponding one of the buttons (24). In one embodiment, each of these buttons (24) may be programmed to change the operation of the knob-like first input member (21). The display means (30') may further more comprise a field (34) where longer messages or instructions can be displayed.

A fifth button (25), in line with the group (24), may be a power on-off switch for turning the user interface device (100) on and off. Alternatively, it may be used to re-start or re-set the programming for the group of buttons (24). A further button (26), which is provided at the top right-hand side of the schematic layout for the control panel (20) shown in Fig. 2, is a sensitivity controller - typically in the form of a continuous potentiometer. This sensitivity button (26) enables the user to adjust and set the sensitivity in every application for which the device (100) is used.

The user interface device (100) of the present invention provides a compact and very user-friendly device for freely navigating the point of view of a digital image or model, and enabling both zoom and pan operations to be performed simultaneously. Thus, the device (100) of the invention can provide the user with a very natural and intuitive way to explore and manipulate two-dimensional and three-dimensional images and designs in the computer environment, particularly within a CAD/CAM or image processing software application. Another advantage of the invention is that it reduces the necessity for the user to make frequent hand motions to and from and operating keyboard - especially when the user interface device (100) incorporates the group of "keyboard" or "high frequency" buttons (23).

The user interface device (100) of the invention is typically envisaged for operation in conjunction with a regular computer monitor and keyboard and a conventional computer mouse. As described above, the user interface device (100) of the invention is preferably designed for left-handed use, in which case the user will typically operate the conventional mouse with the right hand. The conventional mouse and keyboard remain integral elements of the overall design process, with the mouse typically being used in 2D drafting mode, e.g. in a "sketching phase" for sketching geometries, and for selecting and confirming commands. The keyboard meanwhile is typically used to input numbers (such as dimensions) and text (such as file names).

The user interface device (100) of the invention is especially suited to motion control input with 3D models, objects and designs; for example, in a "finishing phase" during which design details such as holes, rounds, chamfers, threads, etc. are added, and in the "editing, assembling and understanding phases" during which the dimensions of the components may be controlled and modified, and the completed components assembled together. Nevertheless, as described above, the device (100) according to the invention may also be adapted for operation in the 2D mode (e.g. actuation of the 2D button (22)) thereby reducing the user's reliance on the conventional mouse.

It will be understood that alterations and/or additions may be made to the various parts of the device (100) described with reference to the accompanying drawings without departing from the scope of the present invention.

## Claims

1. A user interface device (100) for manual input of 3D screen-object motion control signals in a computer environment, the device being adapted for connection in communication with a computer processing unit, and comprising:
a base (10) for supporting the device on an operating surface;
a control panel (20) including a first input member (21) mounted on and upstanding from the base for manual manipulation by a user, the first input member being movable relative to the base (10) for generating corresponding input control signals within the computer environment;
a display panel (30) provided on the base (10) for presenting a visual display of information relating to the operation of the device; and
a palm rest (40) provided on the base for supporting the palm of the user's hand during use of the device.

2. A device according to claim 1, wherein the base (10) of the device has an upper side (11) presenting the control panel (20), the display panel (30) and the palm rest (40) for access by the user, and an underside designed to face the operating surface upon which the device is supported during use.

3. A device according to claim 2, wherein the display panel (30), control panel (20) and palm rest (40) are arranged adjacent one another on the upper side of the base (10), the display panel (30) being arranged at one end region (12) of the base (10), the palm rest (40) being provided at an opposite end region (13) of the base, and the control panel (20) being located between the display panel (30) and the palm rest (40) in a central region of the upper side of the base (10).

4. A device according to any one of the preceding claims, wherein the palm rest (40) has a substantially flat or slightly concave upper surface (41) for receiving and supporting the palm of the user's hand.

5. A device according to any one of the preceding claims, wherein the palm rest (40) has a convex upper surface (41) adapted to nestle within the palm of the user's hand during operation of the device (100).

6. A device according to any one of the preceding claims, wherein an upper surface (41) of the palm rest (40) is smooth, and lightly padded or resilient.

7. A device according to any one of the preceding claims, wherein the display panel (30) is adapted to display information relating to the operation currently being performed with the device (100), and/or the functional options currently available to the user with the device (100).

8. A device according to any one of the preceding claims, wherein the display panel (30) comprises a liquid crystal display (LCD).

9. A device according to any one of the preceding claims, wherein the display panel (30) comprises a plurality of discrete display windows or screens (33).

10. A device according to any one of the preceding claims, wherein the display panel (30) comprises a single display window or screen for presenting all of the visual display of information.

11. A device according to any one of the preceding claims, wherein the control panel (20) further includes a group of user input buttons (22, 23, 24), each of which can be actuated to generate an associated input control signal within the computer environment, wherein at least one of said buttons (22, 23, 24) is programmable, and
wherein the display panel (30) is adapted to display a currently programmed function of the at least one programmable button (24).

12. A device according to claim 11, wherein the function of each of the buttons (22, 23, 24) in said group is programmable, and the display panel (30) is adapted to display the programmed function of all of said programmable buttons (24).

13. A device according to claim 12, wherein the group (24) comprises at least three, and preferably four, or even as many as six or more buttons.

14. A device according to any one of claims 11 to 13, wherein the device (100) includes operating software designed to enable the function associated with actuation of said at least one programmable user input button (24) to be altered or set.

15. A device according to claim 14, wherein the operating software enables the at least one programmable button (24) to be programmed to perform one of a number of different possible functions, and wherein the display panel (30) is adapted to display said possible functions available for said button(s) prior to selection.

16. A device according to any one of claims 11 to 15, wherein the device (100) is configured such that, when the palm of the user's hand is located on the palm rest (40), the first input member (21) is located in general alignment with and within reach of the middle three fingers of the hand, and the said group of buttons (22, 23, 24) is arranged one of the following positions: (i) in the vicinity of the user's thumb, or (ii) in the vicinity of the user's smallest finger.

17. A device according to claim 16, wherein the device (100) includes at least two groups of user input buttons (22, 24), one of said groups (24) comprising buttons whose function is able to be programmed, and the other group (22) comprising buttons having a pre-set or predetermined operation, one of said groups (22) being arranged in the vicinity of the user's thumb and the other said group (24) being arranged in the vicinity of the user's smallest finger.

18. A device according to any one of the preceding claims, wherein the first input member (21) is a knob-like element, preferably having a height upstanding from the base (10) of the device (100) in the range of about 20mm to about 50mm.

19. A device according to claim 18, wherein the first input member (21) is rounded with a diameter in the range of about 30mm to 60mm.

20. A device according to claim 19, wherein the first input member (21) is adapted for rotary movement relative to the base (10) about a substantially vertical axis.

21. A device according to claim 19 or 20, wherein the first input member (21) is adapted for pivotal and/or translational movement relative to the base (10).

22. A device according to claim 20 or 21, wherein the first input member (21) is adapted for "finger-tip control", such that rotary, pivotal and/or translational movement of the first input member requires a force commensurate with what can be readily applied by an average user's fingers.

23. A device according to claim 22, wherein the first input member (21) is resiliently mounted on the base (10) such that rotary, pivotal and/or translational movement of the first input member relative to the base is against a resilient bias that acts to return the first input member (21) to a neutral or home position.

24. A device according to claim 23, wherein the resilient bias of the first input member (21) is less than about 15 N/mm, preferably in the range of about 0.5 to about 10 N/mm, and more preferably in the range of about 1 to about 5 N/mm.

25. A device according to any one of the preceding claims, incorporating a sensor arrangement adapted to detect and interpret movement of the first input member (21) relative to the base (10) for generating corresponding input control signals within the computer environment, wherein the sensor arrangement is at least partially housed within a central space encompassed by the first input member (21).

26. A user interface device (100) for manual input of control signals in a computer environment, the device being adapted for connection in communication with a computer processing unit, and comprising:
a base (10) for supporting the device on an operating surface;
a control panel (20) provided on the base, including a first input member (21) mounted on and upstanding from the base (10) for manual manipulation by a user, the first input member (21) being movable relative to the base (10) to generate corresponding input control signals within the computer environment; and
a palm rest (40) provided on the base (10) for supporting the palm of the user's hand during use of the device (100);
wherein the control panel (20) further includes a group of user input buttons (22, 23, 24), each of which can be actuated to generate an associated input control signal, wherein at least one of said buttons (22, 23, 24) is programmable; and
wherein the device (100) includes display means (30, 30') provided on the base (10) for displaying the programmed associated control signal or function of each programmable button (22, 23, 24).

27. A device according to claim 26, wherein each of the buttons in the group (22, 23, 24) is programmable, said group (22, 23, 24) comprising two or more buttons, and wherein the device includes operating software designed to enable the function associated with actuation of each button to be altered or set to one of a number of possible alternatives.

28. A device according to claim 26 or claim 27, wherein the device (100) is configured such that, when the palm of the user's hand is located on the palm rest (40), the first input member (21) is located in general alignment with, and within reach of, the middle three fingers of the hand, and wherein the said group of buttons (22, 23, 24) is arranged either in the vicinity of the user's thumb or in the vicinity of the user's smallest finger.

29. A device according to claim 28, wherein the device (100) includes at least two groups of user input buttons (22, 24), one of said groups (24) comprising buttons whose function is able to be programmed, and the other group (22) comprising buttons having a pre-set or predetermined operation, one of said groups (22) being arranged in the vicinity of the user's thumb and the other said group (24) being arranged in the vicinity of the user's smallest finger.

30. A device according to any one of claims 26 to 29, wherein the means (30, 30') for displaying the currently programmed function of each programmable button (24) comprises a display panel provided on the base.

31. A device according to claim 30, wherein the display panel comprises a plurality of discrete display windows or screens, each of which is associated with a corresponding one of the programmable buttons (24).

32. A device according to claim 31, wherein the display panel comprises a single display window or screen for presenting all of the visual display of information.

33. A device according to any one of claims 26 to 32, wherein the display means (30', 30) is adapted to display the currently programmed function of each of the programmable buttons (24), and/or information relating to the operation currently being performed with the device (100).

34. A device according to any one of claims 26 to 33, wherein the display means (30, 30') comprises one or more liquid crystal display (LCD).

35. A user interface device (100) for manual input of control signals in a computer environment, the device being adapted for connection in communication with a computer processing unit, and comprising:
a base (10) for supporting the device on an operating surface;
a control panel (20) provided on the base (10), including a first input member (21) mounted on and upstanding from the base (10) for manual manipulation by a user, the first input member (21) being moveable relative to the base for generating input control signals within the computer environment; and
a palm rest (40) provided on the base for supporting the palm of the user's hand during use of the device (100);
wherein the device (100) is configured such that, in use, the first input member (21) is located generally aligned with and within reach of the middle three fingers of the user's hand when the palm of the user's hand is on the palm rest (40); and
wherein the control panel (20) further includes at least two groups of user input buttons (22, 23, 24), one of said groups (22, 23, 24) being located in the vicinity of the user's thumb and the other said group (22, 23, 24) being located in the vicinity of the user's smallest finger when the device is in use.

36. A device according to claim 35, further including display means for presenting a visual display of information relating to the operation of the device.

37. A device according to claim 36, wherein the display means comprises a display panel (30, 30') provided on the base (10).

38. A device according to claim 37, wherein the display panel (30, 30') is adapted to display information relating to a user operation currently being performed with the device, and/or functions available via at least some of the buttons (22, 23, 24).

39. A device according to claim 37 or claim 38, wherein the display panel (30, 30') comprises a liquid crystal display (LCD).

40. A device according to claim 35, wherein the display means is software based, such that a monitor of the associated computer processing unit is adapted to display or present the information relating to the operation of the device (100).

41. A system for image generation and/or manipulation in a computer environment, wherein the system includes a user interface device (100) according to any one of the preceding claims.
